**Europäisches Patentamt**

**European Patent Office**

**Office européen des brevets**

(19)

(11) Veröffentlichungsnummer: **0 116 274**
A2

(12)

# EUROPÄISCHE PATENTANMELDUNG

(21) Anmeldenummer: **84100107.6**

(22) Anmeldetag: **07.01.84**

(51) Int. Cl.³: **B 25 G 1/12**
**B 25 B 23/16**

(30) Priorität: **15.01.83 DE 3301202**

(43) Veröffentlichungstag der Anmeldung:
**22.08.84 Patentblatt 84/34**

(84) Benannte Vertragsstaaten:
**FR GB IT NL**

(71) Anmelder: **Felo Holland-Letz GmbH & Co. KG**

**D-3577 Neustadt(DE)**

(72) Erfinder: **Holland-Letz, Horst, Dipl.-Ing.**

**D-3677 Neustadt(DE)**

(74) Vertreter: **Patentanwaltsbüro Cohausz & Florack**
**Postfach 14 01 47**
**D-4000 Düsseldorf 1(DE)**

(54) **Im Spritzgussverfahren aus Kunststoff hergestellter Werkzeuggriff.**

(57) Die Erfindung bezieht sich auf einen Werkzeuggriff, insbesondere Schraubendrehergriff, in einer ergonomisch gestalteten Form. Der Griff ist aus Kunststoff und einem Füllstoff im Spritzgußverfahren hergestellt. Als Füllstoff finden Holzgranulat oder Holzmehl sowie Glasfasern Verwendung. Dadurch erhält der Griff eine griffige Oberflächenstruktur sowie eine hohe Bruchfestigkeit und Schlagzähigkeit.

EP 0 116 274 A2

# COHAUSZ & FLORACK 0116274

PATENTANWALTSBÜRO
SCHUMANNSTR. 97 D-4000 DÜSSELDORF 1
Telefon: (02 11) 68 33 46    Telex: 0858 6513 cop d

PATENTANWÄLTE:
Dipl.-Ing. W. COHAUSZ · Dipl.-Ing. R. KNAUF · Dipl.-Ing. H. B. COHAUSZ · Dipl.-Ing. D. H. WERNER

## Werkzeuggriff, insbesondere Schraubendrehergriff

Die Erfindung bezieht sich auf einen im Spritzgußverfahren aus Kunststoff hergestellten Werkzeuggriff mit eingelagerten Glasfasern, insbesondere Schraubendrehergriff.

Es ist bekannt, als Hammerstiele dienende Werkzeuggriffe aus Kunststoff im Spritzgußverfahren mit eingelagerten Glasfasern herzustellen. Bei solchen Hammerstielen haben die Glasfasern die Aufgabe, dem Stiel eine hohe Zähigkeit zu geben. Der Rutschfestigkeit kommt bei Hammerstielen allerdings eine wesentlich geringere Bedeutung als bei anderen Werkzeuggriffen, wie z.B. Schraubendrehergriff, hinzu. (US-PS 3 613 753.

Von Schraubendrehergriffen wird neben einer hohen Verschleißfestigkeit verlangt, daß von der Hand auf den Griff ein hohes Drehmoment übertragen werden kann. Diese Forderungen hat man durch verschiedene Maßnahmen zu erfüllen versucht.

Bei Schraubendrehergriffen aus Holz, die zwar von Hause aus eine poröse Oberfläche und damit eine natürliche Rutschfestigkeit haben, war es erforderlich, zum Schutze des Holzes die Oberfläche zu lackieren. Dadurch wurde die natürliche Rutschfestigkeit wieder aufgehoben und es war erforderlich, in der Oberfläche durch Drehen oder Fräsen einfache Profilierungen einzuarbeiten. Dabei geht ein großer Volumenanteil des Rohlings durch Zerspanen verloren. Dies gilt insbesondere bei einer balligen, der Hand angepaßten Grifform.

Ein weiterer Nachteil solcher Schraubendrehergriffe bestand in der geringen Verschleißfestigkeit wegen des relativ weichen Werkstoffes Holz.

Aus diesen Gründen werden heute überwiegend Schraubendrehergriffe aus Kunststoff im Spritzgußverfahren hergestellt. Bei der Formgestaltung durch Spritzgießen können nämlich ergonomische Gesichtspunkte weitgehend berücksichtigt werden, so daß der Schraubendrehergriff gut in der Hand liegt und aus diesem Grunde ein hohes Drehmoment übertragen werden kann. Ein weiterer Vorteil von solchen Griffen besteht darin, daß sie verhältnismäßig schlagfest sind, einem geringen Verschleiß unterliegen und gegen Mineralöle beständig sind. Der Nachteil solcher Schraubendrehergriffe liegt aber darin, daß sie trotz ihrer nach ergonomischen Gesichtspunkten gestalteten Form wegen der dichten Struktur des Materials und der glatten Oberfläche in einer öligen oder feuchten Hand leicht rutschen. Um die Rutschfestigkeit zu erhöhen, hat man, wie bei einem Schraubendrehergriff aus Holz, in der Oberfläche Rillen eingearbeitet oder der Oberfläche eine feine Struktur, beispielsweise durch Ätzen, gegeben.

Versuche, eine rauhe Griffoberfläche durch Zusetzen von Treibmittel zu erhalten, haben nicht den gewünschten Erfolg gebracht, denn die sich im Kunststoff bildenden Bläschen machen den Griff zwar innen porös, gelangen aber nicht an die Oberfläche, sondern erzeugen einen Innendruck, der die Oberfläche wieder dicht und glatt macht. Außerdem wird die Fertigungszeit eines solchen Werkzeuggriffs verlängert, weil der Griff wegen des wirksamen Treibmittels solange in der geschlossenen Form bleiben muß, bis der Kunststoff bis unter die Temperatur abgekühlt ist, bei der das Treibmittel vergast.

Der Erfindung liegt die Aufgabe zugrunde, einen Werkzeuggriff der eingangs genannten Art dahingehend zu verbessern, daß er bei einer rutschfesten Oberfläche eine hohe Bruchfestigkeit und hohe Schlagzähigkeit hat.

Diese Aufgabe wird erfindungsgemäß dadurch gelöst, daß dem Kunststoff als Füllstoffe Holzgranulat, Holzmehl oder Mischungen dieser Stoffe zugesetzt sind.

Ein solcher Werkstoff vereinigt die Vorteile eines Griffes aus Holz mit denen eines Griffes aus Kunststoff, d.h., daß sich ein solcher Griff im Spritzgußverfahren in eine nach ergonomischen Gesichtspunkten gestaltete Form bringen läßt und dabei eine rutschfeste Oberfläche erhält. Die Beimischungen an Holzgranulat oder Holzmehl geben dem Griff eine porige Struktur über den gesamten Querschnitt, also auch an seiner Oberfläche. Die durch den Holzanteil verminderte Bruchfestigkeit und Schlagzähigkeit wird ausgeglichen durch den Glasfaseranteil, der eine Vernetzung des Gefüges des Griffes bewirkt, so daß auch im Hinblick auf die Festigkeit und Verschlußfestigkeit der erfindungsgemäße Werkzeuggriff einem Griff aus Kunststoff ohne Füllstoffe nicht nachsteht.

Der erfindungsgemäße Werkzeuggriff eignet sich wegen dieser Eigenschaften für verschiedene Einsatzgebiete z.B. für Schraubendreher, Stechbeiten, Sägen usw..

Versuche haben gezeigt, daß der Anteil der Füllstoffe am Gesamtgewicht vorzugsweise unter 50 % liegt. Der Gewichtsanteil an Glasfasern sollte größer, insbesondere etwa doppelt so groß, wie der Gewichtsanteil des Holzfüllstoffes sein. Wird ein langfaseriger Holzfüllstoff eingesetzt kann der Anteil an Glasfasern vermindert werden. Besonders gute Ergebnisse wurden mit einem Gewichtsanteil des Holzfüllstoffes zwischen 3 und 20, insbesondere mit 10 %, und mit einem Gewichtsanteil der Glasfasern zwischen 5 und 35, insbesondere mit 10 %, erzielt. Die Korngröße des Holzfüllstoffes sollte zwischen 100 und 700 $\mu$m, insbesondere zwischen 150 und 350 $\mu$m liegen. Als geeignet

haben sich folgende Kunststoffe erwiesen, und zwar Polyurethan, Polyester, ABS, Cellulose-Azetat und insbesondere Polypropylen und Polyamid.

Durch Zusatz von Farbe oder gefärbtem Füllmittel kann der Griff durchgehend eingefärbt werden.

Im folgenden wird die Erfindung anhand einer einen Schraubendreher darstellenden Zeichnung näher erläutert.

Die Klinge 1 des Schraubendrehers ist im aus Kunststoff bestehenden Werkzeugheft (Griff) eingegossen. Das Werkzeugheft ist im Spritzgußverfahren aus Kunststoff mit Füllstoffen, wie Holzgranulat oder dgl. und Glasfaser hergestellt. Das Werkzeugheft setzt sich im wesentlichen aus drei Teilen zusammen, und zwar einem ersten, größeren Kegelstumpf 2 mit kugelig abgerundeter Spitze 3, einem zweiten, kleineren Kegelstumpf 4 und einer umlaufenden Holzkehle 5, die zwischen den Kegelstümpfen 2, 4 liegt. Die Spitze des kleineren Kegelstumpfes 4 geht über eine Hohlkehle 6 in einen Kranz 7 über, der als Sechskant ausgebildet ist, um Schraubenschlüssel ansetzen zu können.

Aufgrund der erfindungsgemäßen Gestaltung des Heftes ist sowohl die Übertragung größter Drehmomente bei weitgehender Schonung der Haut der Hand als auch eine optimale Führung des Heftes beim Umgreifen möglich. Wegen der sich durch den Füllstoff, Holzgranulat oder Holzmehl ergebenden rauhen Oberflächenstruktur ist die Rutschfestigkeit des Schraubendrehergriffes selbst in einer feuchten oder öligen Hand groß. Der Glasfaseranteil macht den Werkzeuggriff bruchfest und schlagzäh, so daß er den Beanspruchungen eines am Sechskant 7 angesetzten Schraubenschlüssels und Hammerschlägen auf die abgerundete Spitze 3 standhält.

COHAUSZ & FLORACK
PATENTANWALTSBÜRO
SCHUMANNSTR. 97 D-4000 DÜSSELDORF 1
Telefon: (02 11) 68 33 46                    Telex: 0858 6513 cop d

PATENTANWÄLTE:
Dipl.-Ing. W. COHAUSZ   ·   Dipl.-Ing. R. KNAUF   ·   Dipl.-Ing. H. B. COHAUSZ   ·   Dipl.-Ing. D. H. WERNER

0116274

-5-                                23. August 1983

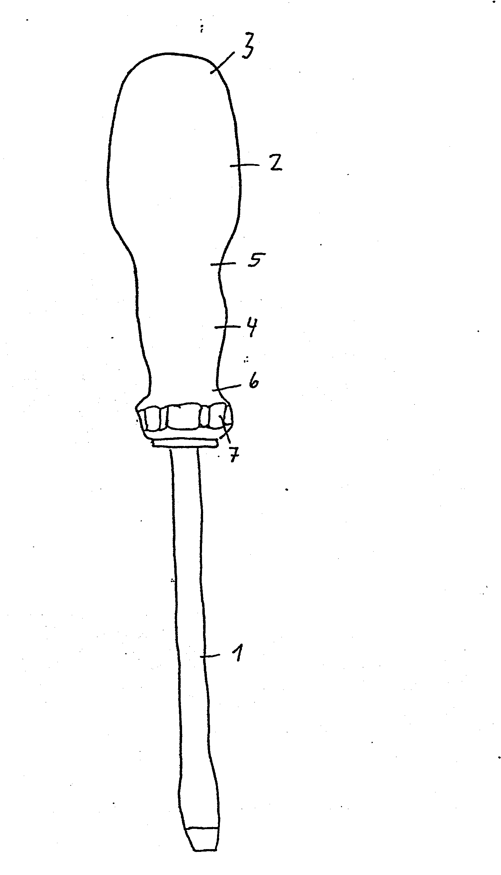

Ansprüche:

1.   Im Spritzgußverfahren aus Kunststoff hergestellter Werkzeuggriff mit eingelagerten Glasfasern, insbesondere Schraubendrehergriff,
d a d u r c h   g e k e n n z e i c h n e t ,
daß dem Kunststoff als Füllstoffe Holzgranulat, Holzmehl oder Mischungen dieser Stoffe zugesetzt sind.

2.   Werkzeuggriff nach Anspruch 1,
d a d u r c h   g e k e n n z e i c h n e t ,
daß der Anteil der Füllstoffe am Gesamtgewicht unter 50 % liegt.

3.   Werkzeuggriff nach Anspruch 2,
d a d u r c h   g e k e n n z e i c h n e t ,
daß der Gewichtsanteil an Glasfasern größer als der Gewichtsanteil des Holzfüllstoffes ist.

4.   Werkzeuggriff nach Anspruch 3,
d a d u r c h   g e k e n n z e i c h n e t ,
daß der Gewichtsanteil an Glasfasern  etwa doppelt so groß wie der Gewichtsanteil des Holzfüllstoffes ist.

5.   Werkzeuggriff nach einem der Ansprüche 1 bis 4,
d a d u r c h   g e k e n n z e i c h n e t ,
daß der Gewichtsanteil des Holzfüllstoffes zwischen 3 und 20, insbesondere bei 10 %, liegt.

K/Tn.- 37 007
5.1.83

6. Werkzeuggriff nach einem der Ansprüche 1 bis 5, d a d u r c h  g e k e n n z e i c h n e t , daß der Gewichtsanteil an Glasfasern zwischen 5 und 35 , insbesondere bei 15 %, liegt.

7. Werkzeuggriff nach einem der Ansprüche 1 bis 6, d a d u r c h  g e k e n n z e i c h n e t , daß die Korngröße des Holzfüllstoffes zwischen 100 und 700 µm, insbesondere zwischen 150 und 350 µm liegt.

8. Werkzeuggriff nach einem der Ansprüche 1 bis 7, d a d u r c h  g e k e n n z e i c h n e t , daß der Kunststoff Polyurethan, Polyester, ABS oder Celluloseazetat, insbesondere Polypropylen und Polyamid, ist.

0116274